# EUROPÄISCHE PATENTSCHRIFT

(11) **EP 0 463 215 B1**
(45) Veröffentlichungstag und Bekanntmachung des Hinweises auf die Patenterteilung: **25.09.1996**
(21) Anmeldenummer: 90112267.1
(22) Anmeldetag: 27.06.1990
(51) Int. Cl.: H04Q 11/04

(54) **Kommunikationsnetz zum Aufbau einer redundanten Verbindung**
Communication network for establishing a redundant link
Réseau de communication pour établir une liaison rédondante

(43) Veröffentlichungstag der Anmeldung: 02.01.1992
(73) Patentinhaber: SIEMENS AKTIENGESELLSCHAFT, 80333 München (DE)
(72) Erfinder: Rabold, Jürgen, Dipl.-Phys., D-8021 Neuried (DE)

(56) Entgegenhaltungen:
- EP-A- 0 219 917
- WO-A-82/00232
- DE-A- 3 513 165
- TECHNISCHE MITTEILUNGEN PTT no. 12, 1973, Bern, CH Seiten 554 - 578; K.E.Wuhrmann: "Das integrierte PCM-Fernmeldesystem IFS-1"

## Beschreibung

Die Erfindung betrifft ein Kommunikationsnetz nach dem Oberbegriff des Anspruchs 1.

Über Kommunikationsnetze werden Verbindungswege zur Übertragung von Informationen zwischen zwei oder mehreren Verbindungspartnern geschaltet, z.B. zur Übertragung von Nutzinformationen zwischen einem ersten Teilnehmer und einem zweiten Teilnehmer oder von Rechnerinformationen zwischen einem ersten Rechner und einem zweiten Rechner.
Die Anforderungen, die die Verbindungspartner an die Verbindung bezüglich deren Ausfallsicherheit stellen, sind in der Regel unterschiedlich hoch.

Bisher ist es bekannt, für alle Verbindungen den maximalen Anforderungen zu entsprechen. Das Kommunikationsnetz wird zu diesem Zweck vervielfacht, z.B. durch eine zweite Netzebene verdoppelt, durch eine dritte Netzebene verdreifacht, durch eine vierte Netzebene vervierfacht (Quadredundanz).

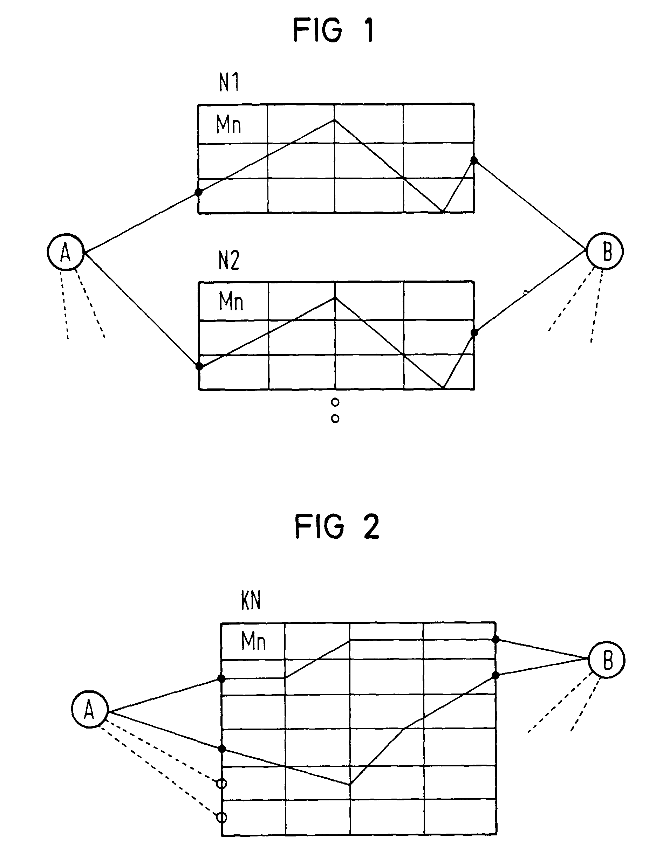

Figur 1 zeigt als spezielles Beispiel eines Kommunikationsnetzes ein verdoppeltes Koppelnetz einer Fernmeldevermittlungsstelle mit einer ersten Netzebene N1 und einer zweiten Netzebene N2, wobei die Netzebenen jeweils aus Netzmodulen Mn bestehen. Eine bestehende Verbindung zwischen einem ersten Verbindungspartner A und einem zweiten Verbindungspartner B ist durch zwei Verbindungswege abgesichert, die in FIG 1 durch zwei durchgezogene Linien dargestellt sind. Die Redundanzstruktur dieses Koppelnetzes besteht darin, daß jeder für eine bestimmte Verbindung benutzte Verbindungsweg einer Netzebene einen entsprechenden, fest zugeordneten redundanten Verbindungsweg in der anderen Netzebene besitzt. Bei Ausfall eines für eine Verbindung benutzten Verbindungsweges wegen des Ausfalls eines Netzmoduls kann dann auf den entsprechenden, die Kopie des bisherigen Verbindungsweges darstellenden Verbindungsweg in der anderen Netzebene umgeschaltet werden.

Aus der internationalen Anmeldung WO-A 8 200 232 ist ebenfalls ein Koppelnetz mit zwei Netzebenen bekannt. Im Unterschied zum Koppelnetz nach FIG 1 werden die beiden Verbindungswege einer Verbindung über die beiden Netzebenen allerdings nicht identisch aufgebaut, sondern voneinander unabhängig.

Das Konzept der mehrfachen Netzebenen hat den Nachteil, daß für solche Verbindungen, die keine maximale Anforderung bezüglich der Ausfallsicherheit stellen, dennoch immer redundante Verbindungswege bereitgestellt werden. Um gedoppelte Koppelnetze besser auszunützen, ist bei der nicht vorveröffentlichten älteren Anmeldung DE-A-39 21 629.2 vorgeschlagen worden, mittels einer sich im Anschlußmodul befindlichen Weiche die durch das Koppelnetz zu vermittelnden Verbindungen in zwei unterschiedliche Kategorien einzuteilen, von denen nur für Verbindungen der ersten Kategorie zwei Verbindungswege durchgeschaltet werden, während für Verbindungen der zweiten Kategorie jeweils immer nur ein Verbindungsweg durchgeschaltet wird.

Die letztgenannte Verfahrensweise ist immer noch wenig flexibel, da sich die Zahl der redundanten Netzebenen nach wie vor nach derjenigen Verbindung richtet, die bezüglich der Ausfallsicherheit die maximale Anforderung an das vermittelnde Netz stellt. Außerdem ist der Anschlußmodul wegen seiner Weichenfunktion hierbei nicht verdoppelbar, weshalb auch die Verbindungen der ersten Kategorie im Anschlußbereich keine Redundanz aufweisen.

Der Erfindung liegt die Aufgabe zugrunde, ein Kommunikationsnetz anzugeben, dessen Architektur unabhängig von den unterschiedlichen Anforderungen der Verbindungspartner an die Ausfallsicherheit einer Verbindung ist.

Diese Aufgabe wird durch die Merkmale des Anspruchs 1 gelöst.

Durch die erfindungsgemäßen Merkmale des Anspruchs 1 wird es ermöglicht, daß ein Verbindungspartner je nach Anforderung den Aufbau beliebig vieler Verbindungswege und damit beliebig hohe Ausfallsicherheit für eine Verbindung veranlassen kann, ohne auf die durch die Architektur des Kommunikationsnetzes bestimmte Redundanz festgelegt zu sein. Damit können insbesondere auch nur einfache, kostengünstige Verbindungswege, die keine Redundanz aufweisen, aufgebaut werden.

Die Betriebssicherheit eines solchen Kommunikationsnetzes ist unabhängig vom Ausfall eines oder mehrerer Netzmodule gewährleistet. Die Anforderungen an die Instandsetzzeit eines ausgefallenen Netzmoduls des Kommunikationsnetzes sind dadurch sehr gering und bemessen sich nur mehr danach, wie viele Ausfälle an Netzmodulen das Kommunikatonsnetz ohne wesentliche Beeinträchtigung seiner Vermittlungskapazität in Kauf nehmen kann.

Die Vermittlungskapazität des bevorzugten Koppelnetzes wird bei Ausfall eines Netzmoduls im Vergleich zu üblichen Koppelnetzen mit mehreren Netzebenen, die dieselbe Zahl an Netzmoduln aufweisen, nur in geringem Maß beeinträchtigt.

Eine bevorzugte Ausführungsform des erfindungsgemäßen Kommunikationsnetzes nach Anspruch 2 besitzt insbesondere den Vorteil, daß bei Ausfall eines Verbindungsweges eine anfängliche Redundanz an Verbindungswegen wieder hergestellt werden kann, ohne die betreffende Verbindung unterbrechen und wieder neu aufbauen zu müssen.

Eine bevorzugte Ausführungsform eines Kommunikationsnetzes nach Anspruch 3 besitzt insbesondere den Vorteil, daß die Redundanz einer Verbindung über das Kommunikationsnetz hinaus bis zu den Verbindungspartnern ausgedehnt werden kann.

Eine weitere bevorzugte Ausführungsform eines Kommunikationsnetzes nach Anspruch 4 besitzt insbesondere den Vorteil, daß redundante Verbindungen auch bei einem Ausfall eines Netzmoduls, der Anschlußschaltungen beinhaltet, nicht unterbrochen werden.

Ein bevorzugtes spezielles Kommunikationsnetz nach Anspruch 5 besitzt insbesondere den Vorteil,daß Koppelnetze der genannten Art üblicherweise bereits in Vermittlungsstellen vorhanden sind.

Ein Kommunikationsnetz nach Anspruch 6 hat insbesondere den Vorteil, daß das erfindungsgemäße Verfahren zum Aufbau von redundanten Verbindungen auch über mehrere Vermittlungsstellen bzw. Koppelnetze in einfacher Weise ausgedehnt werden kann. Redundante Verbindungen können auch bei Ausfall einer gesamten Vermittlungsstelle aufrecht erhalten werden.

Es folgt die Beschreibung der vorliegenden Erfindung anhand der Zeichnung:

FIG 1 zeigt eine Verbindung über ein gedoppeltes Koppelnetz nach dem Stand der Technik.

FIG 2 zeigt eine erfindungsgemäße redundante Verbindung über ein erfindungsgemäßes Koppelnetz mit nur einer einheitlichen Netzebene.

FIG 3 zeigt eine erfindungsgemäße redundante Verbindung über ein erfindungsgemäßes Koppelnetz, bei dem gerade ein Netzmodul Mₓₓ ausgefallen ist.

FIG 4 zeigt eine erfindungsgemäße redundante Verbindung, deren Verbindungswege über dieselben Vermittlungsstellen eines Fernmeldevermittlungsnetzes verlaufen.

FIG 5 zeigt eine erfindungsgemäße redundante Verbindung, deren Verbindungswege über unterschiedliche Vermittlungsstellen eines Fernmeldevermittlungsnetzes verlaufen.

FIG 1 ist als zum Stand der Technik gehörend bereits in der Beschreibungseinleitung beschrieben.

FIG 2 zeigt ein erfindungsgemäßes Koppelnetz KN mit nur einer einheitlichen Netzebene, in der stufenweise vermaschte Netzmodule Mn angeordnet sind. Die stufenweise Vermaschung der Netzmodule durch Zwischenleitungen ist in FIG 2 deshalb nicht ausgeführt, weil das erfindungsgemäße Verfahren nicht an eine spezielle Art der Vermaschung, wie sie üblicherweise bei Koppelnetzen vorliegt, gebunden ist. Des weiteren ist eine durch das Koppelnetz KN vermittelte Verbindung zwischen einem Verbindungspartner A und einem Verbindungspartner B dargestellt, deren Ausfallsicherheit durch zwei durchgeschaltete Verbindungswege, die als durchgehende Linien gezeichnet sind, gewährleistet wird.

Die beiden Verbindungswege dieser Verbindung liegen in derselben Netzebene und sind so aufgebaut, daß ein an dieser Verbindung beteiligter Netzmodul nur an einem der beiden Verbindungswege dieser Verbindung beteiligt ist. Der Verlauf der beiden Verbindungswege durch das Koppelnetz ist ansonsten voneinander unabhängig, d.h. der redundante Verbindungsweg ist ansonsten nicht durch den Verlauf des aktiven Verbindungsweges eingeschränkt bzw. vorbestimmt. Aus diesem Grund ist auch der Aufbau von nur einfachen Verbindungen mit nur einem Verbindungsweg ohne weiteres möglich.

Der Aufbau eines an einer Verbindung beteiligten Verbindungsweges wird von einer Steuerung kontrolliert, die unter anderem dafür sorgt, daß ein Netzmodul an der Durchschaltung von höchstens einem Verbindungsweg einer bestimmten Verbindung beteiligt wird. Die Steuerung kann zu diesem Zweck sowohl zentral als auch dezentral erfolgen.

In FIG 2 ist durch gestrichelte Linien angedeutet, daß ein Verbindungspartner je nach Anforderung auch über mehr als zwei Anschlußschaltungen verfügen kann. Wegen des erfindungsgemäß unabhängigen Verbindungswegeaufbaus kann ein solcher Verbindungspartner wahlweise auch redundante Verbindungen mit mehr als zwei Verbindungswegen, entsprechend seiner Zahl von Anschlußschaltungen, aufbauen. Diese unerschiedlichen Redundanzformen haben jedoch keinen Einfluß auf die Architektur des Koppelnetzes.

Bei dem Ausführungsbeispiel gemäß FIG 2 sind die Anschlußschaltungen vorzugsweise bereits in dem Netzmodul enthalten, wobei eine solche Anschlußschaltung zeichnerisch durch einen dicken Punkt an den betreffenden Netzmoduln dargestellt ist. Durch die Einbindung der Anschlußschaltung in den Netzmodul ist die Modularität des Kommunikationsnetzes auf den gesamten Verbindungsweg ausgedehnt. Da ein Netzmodul höchstens eine Anschlußschaltung eines Verbindungspartners beinhaltet, wird eine redundante Verbindung bei Ausfall eines Netzmoduls nicht unterbrochen.

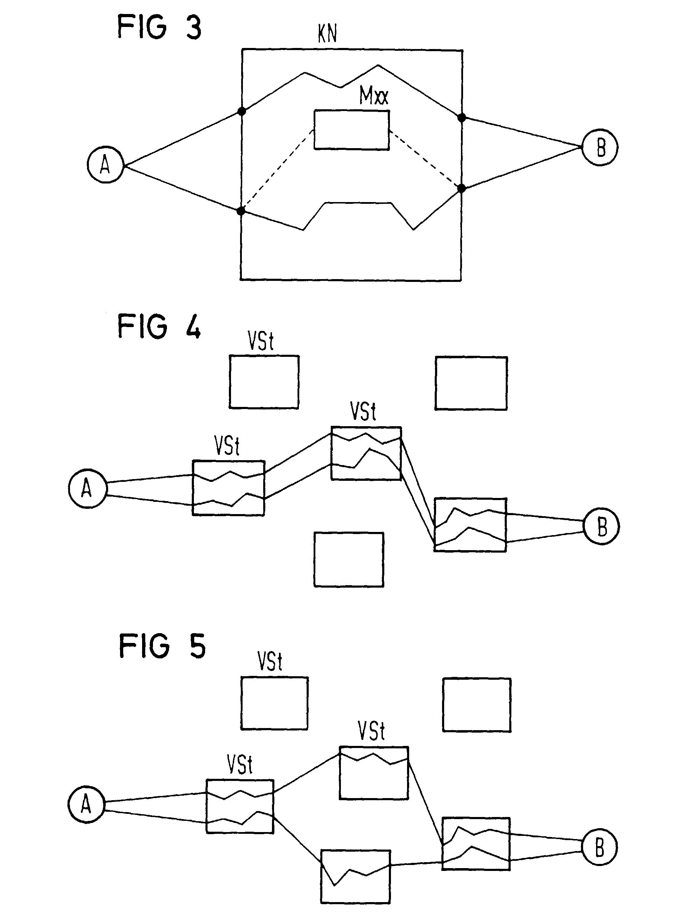

FIG 3 zeigt ein erfindungsgemäßes Koppelnetz KN mit einer Verbindung zwischen einem Verbindungspartner A und einem Verbindungspartner B bei der durch den Ausfall eines Netzmoduls Mₓₓ der aktuelle Verbindungsweg gerade unterbrochen wurde. Durch das Ersatzschalten auf den redundanten Verbindungsweg kann die Verbindung aufrechterhalten bleiben. Darüber hinaus kann in erfindungsgemäßer Weise sogar die Redundanz der Verbindung wiederhergestellt werden, ohne die ersatzgeschaltete Verbindung zu diesem Zweck unterbrechen zu müssen. Dies wird durch den erfindungsgemäß unabhängigen Aufbau der Verbindungswege einer Redundanzverbindung ermöglicht. Die Wiederherstellung eines ausgefallenen Verbindungsweges kann dabei über andere, noch intakte Netzmodule erfolgen. Da die Sicherheit redundanter Verbindungen somit durch den Ausfall eines Netzmoduls nicht beeinträchtigt wird, richtet sich die Anforderung an die Instandsetzzeit eines ausgefallenen Netzmoduls nur danach, wie viele Ausfälle an Netzmoduln das Kommunikationsnetz ohne wesentliche Beeinträchtigung seiner Vermittlungskapazität in Kauf nehmen kann. Die Instandsetzzeit wird dabei um so größer, je stärker das Kommunikationsnetz modularisiert und vermascht ist.

FIG 4 zeigt eine erfindungsgemäße redundante Verbindung zwischen einem Verbindungspartner A und einem Verbindungspartner B, die über mehrere Vermittlungsstellen VSt eines Fernmeldevermittlungsnetzes verläuft. Der Aufbau der beiden Verbindungswege über mehrere Vermittlungsstellen wird durch die Steuerungen der am Aufbau der Verbindung beteiligten Vermittlungsstellen kontrolliert, so daß kein Netzmodul der Koppelnetze der beteiligten Vermittlungsstellen an beiden Verbindungswegen der dargestellten redundanten Verbindung beteiligt ist. Aus Gründen der Übersichtlichkeit ist die Vermaschung der Vermittlungsstellen durch Verbindungsleitungen in FIG 4 nicht dargestellt.

Bei dem in FIG 5 dargestellten erfindungsgemäßen Kommunikationsnetz handelt es sich um ein Fernmeldevermittlungsnetz, bei dem die Netzmoduln Vermittlungsstellen repräsentieren. Die Vermaschung der Vermittlungsstellen ist auch hier nicht explizit dargestellt. Die Verbindungswege einer redundanten Verbindung verlaufen hierbei über unterschiedliche Vermittlungsstellen.

Da ein Verbindungspartner in der Regel an nur einer Vermittlungsstelle angeschlossen ist, läßt sich die Sicherheit einer Verbindung gegenüber dem Ausfall einer Vermittlungsstelle in der Regel nur innerhalb des Vermittlungsnetzes durch redundante Verbindungswege, die nicht über dieselbe Vermittlungsstelle durchgeschaltet werden, erhöhen. Dies bedeutet allerdings einen gegenüber dem durch FIG 4 dargstellten Konzept erhöhten Steuerungsaufwand für den Verbindungsaufbau.

## Patentansprüche

1. Kommunikationsnetz, das aus einer Vielzahl von Netzmodulen (Mn) aufgebaut ist, die jeweils eine Ausfalleinheit darstellen, und das eine Steuerung umfaßt, die den Verbindungsaufbau steuert, wobei die Steuerung Verbindungswege einer redundanten Verbindung zwischen Verbindungspartnern in der Weise unabhängig aufbaut, daß ein Netzmodul an der Durchschaltung von nur einem Verbindungsweg der redundanten Verbindung beteiligt ist,
**dadurch gekennzeichnet**,
daß die Netzmodule nur eine einzige Netzebene formen, und untereinander durch Zwischenleitungen stark vermascht sind.

2. Kommunikationsnetz nach Anspruch 1,
**dadurch gekennzeichnet**,
daß bei einem Ausfall eines Verbindungsweges einer redundanten Verbindung die ursprüngliche Redundanz noch während des Fortbestehens der betreffenden Verbindung durch das Aufbauen eines neuen Verbindungsweges wiederhergestellt wird.

3. Kommunikationsnetz nach Anspruch 1 oder 2,
**dadurch gekennzeichnet**,
daß ein Verbindungspartner über wenigstens zwei Anschlußschaltungen an das Kommunikationsnetz angeschlossen ist.

4. Kommunikationsnetz nach Anspruch 3,
**dadurch gekennzeichnet**,
daß
a) eine Anschlußschaltung eines Verbindungspartners an das Kommunikationsnetz Bestandteil eines Netzmoduls (Mn) ist,
b) ein Netzmodul höchstens eine Anschlußschaltung eines Verbindungspartners beinhaltet.

5. Kommunikationsnetz nach Anspruch 1 bis 4,
**dadurch gekennzeichnet,**
daß
es eine Vermittlungsstelle (VSt) eines Fernmeldevermittlungsnetzes ist, und die Gesamtheit der Netzmodule (Mn) das Koppelnetz (KN) der Vermittlungsstelle darstellen.

6. Kommunikationsnetz nach Anspruch 1 bis 4,
**dadurch gekennzeichnet,**
daß
a) es ein Fernmeldevermittlungsnetz ist, und die Netzmodule (Mn) die Vermittlungsstellen (VSt) des Vermittlungsnetzes darstellen,
b) die Verbindungswege einer redundanten Verbindung über unterschiedliche Vermittlungsstellen verlaufen.

## Claims

1. Communications network which is formed from a large number of network modules (Mn) which each represent a failure unit, and which comprises a controller which controls the setting up of connections, the controller setting up connecting paths of a redundant connection between connection partners independently in such a manner that a network module is involved in switching through only one connecting path of the redundant connection, characterized in that the network modules form only a single network level, and are strongly networked with one another by means of intermediate lines.

2. Communications network according to Claim 1, characterized in that, in the event of a failure of a connecting path of a redundant connection, the original redundancy is still reproduced during the continuation of the relevant connection by setting up a new connecting path.

3. Communications network according to Claim 1 or 2, characterized in that a connection partner is connected to the communications network via at least two termination circuits.

4. Communications network according to Claim 3, characterized in that
a) a termination circuit of a connection partner to the communications network is a component of a network module (Mn),
b) a network module contains at most one termination circuit of a connection partner.

5. Communications network according to Claims 1 to 4, characterized in that said communications network is an exchange (VSt) of a telecommunications switching network, and the totality of the network modules (Mn) represents the coupling network (KN) of the exchange.

6. Communications network according to Claims 1 to 4, characterized in that
a) said communications network is a telecommunications switching network, and the network modules (Mn) represent the exchanges (VSt) of the switching network,
b) the connecting paths of a redundant connection run via different exchanges.

## Revendications

1. Réseau de communication, qui est constitué d'une multiplicité de modules (Mn) de réseau représentant chacun une unité de secours et qui comprend une commande commandant l'établissement de liaison, la commande établissant, indépendamment, des voies de liaison d'une liaison redondante entre des partenaires de liaison, de telle sorte qu'un module de réseau ne participe à la connexion que d'une voie de liaison de la liaison redondante,
caractérisé en ce que,
les modules de réseau ne forment qu'un plan de réseau et sont fortement maillés entre eux par des lignes intermédiaires.

2. Réseau de communication suivant la revendication 1,
caractérisé en ce que
en cas de défaillance d'une voie de liaison d'une liaison redondante, la redondance d'origine est encore rétablie pendant que la liaison concernée continue d'exister, du fait de l'établissement d'une nouvelle voie de liaison.

3. Réseau de communication suivant la revendication 1 ou 2,
caractérisé en ce que
un partenaire de la liaison est connecté au réseau de communication par l'intermédiaire d'au moins deux circuits de raccordements.

4. Réseau de communication suivant la revendication 3,
caractérisé en ce que
a) un circuit de raccordement d'un partenaire de liaison au réseau de communication fait partie d'un module (Mn) de réseau,
b) un module de réseau comprend au plus un circuit de raccordement d'un partenaire de liaison.

5. Réseau de communication suivant l'une des revendications 1 à 4,
caractérisé en ce que
il est un central (VSt) d'un réseau de commutation de télécommunication et l'ensemble des modules (Mn) de réseau forment le réseau (KN) de connexion du central.

6. Réseau de communication suivant l'une des revendications 1 à 4,
caractérisé en ce que
a) il est un réseau de commutation de télécommunication et les modules (Mn) de réseau représentent les centraux (VSt) du réseau de commutation,
b) les voies de liaison d'une liaison redondante passent par des centraux différents.
